# EUROPEAN PATENT APPLICATION

(11) **EP 4 265 361 A1**
(43) Date of publication of application: **25.10.2023**
(21) Application number: 21911437.8
(22) Date of filing: 20.12.2021
(51) Int. Cl.: B23K 9/23, B23K 35/30, B23K 35/02, B23K 37/00, C23C 2/06, C23C 2/40, C22C 38/42, C22C 38/44

(54) **WELDED STRUCTURAL MEMBER HAVING EXCELLENT CRACK RESISTANCE AND MANUFACTURING METHOD THEREOF**

(30) Priority: 21.12.2020 KR 20200179508
(71) Applicant: POSCO Co., Ltd, Pohang-si, Gyeongsangbuk-do 37859 (KR)
(72) Inventor: KIM, Young-Hune, Pohang-si, Gyeongsangbuk-do 37877 (KR)
(74) Representative: Meissner Bolte Partnerschaft mbB
(86) International application number: PCT/KR2021/019411
(87) International publication number: WO 2022/139370

(57) **Abstract**

The present invention relates to a welded structural member having excellent corrosion resistance and crack resistance, and a method for manufacturing same.

## Description

### Technical Field

The present disclosure relates to a welded structural member having excellent crack resistance and a manufacturing method thereof.

### Background Art

A zinc-based plated steel sheet has excellent corrosion resistance and is used for various purposes such as members for automobiles, members for inner and outer plates of home appliances, members for construction, and the like. Thereamong, a Zn-Al-Mg-based plated steel sheet may secure excellent corrosion resistance for a significantly long time, so that demand for the Zn-Al-Mg-based plated steel sheet is increasing as an alternative to a conventional zinc-based plated steel sheet and stainless steel.

The reason why the corrosion resistance of a plating layer of the Zn-Al-Mg-based plated steel sheet is improved as compared to the conventional zinc-based plated steel sheet is that dense and stable corrosion products are uniformly formed by action of Mg on a surface of the plated layer.

Meanwhile, as a prior art reference, a high-frequency resistance welding method has been used when manufacturing a welded structural member. However, in the case of this welding method, since two or more base materials are bonded by melting and press-welding the base material, there may be a problem of increasing costs due to the need for additional equipment, as well as a problem applicable only to pipe shape and H beam.

Accordingly, the need to use arc welding has emerged, and in particular, when manufacturing a welded structural member using a Zn-Al-Mg-based plated steel sheet, an arc welding method was used due to the demand for a technology that can be applied to various shapes and structures with only a welder and welding material without large-scale equipment. However, when arc welding is applied to such a Zn-Mg-Al-based plated steel sheet, a liquidus temperature of the plating layer is lowered due to the inclusion of Mg, causing cracks to occur in the remaining plating layer.
(Patent Document 1) Patent No. 3149129
(Patent Document 2) Patent No. 3179401
(Patent Document 3) Patent No. 4475787
(Patent Document 4) Patent No. 3715220
(Patent Document 5) Japanese Unexamined Publication No. 2005-230912

### Summary of Invention

### Technical Problem

An aspect of the present disclosure is to provide a welded structural member having excellent corrosion resistance and crack resistance and a manufacturing method thereof.

An object of the present disclosure is not limited to the above description. The object of the present disclosure will be understood from the entire content of the present specification, and a person skilled in the art to which the present disclosure pertains will understand an additional object of the present disclosure without difficulty.

### Solution to Problem

According to an aspect of the present disclosure, provided is a welded structural member, the welded structural member including:
a first steel sheet;
a second steel sheet; and
a welded joint portion bonding the first steel sheet and the second steel sheet,
wherein at least one of the first steel sheet and the second steel sheet is a plated steel sheet having a Zn-Al-Mg-based plating layer,
wherein a microstructure of a portion of the Zn-Al-Mg-based plating layer, closest to the welded joint portion includes, by area fraction: 20 to 40% of a Zn-Mg-based intermetallic compound.

According to another aspect of the present disclosure, provided is a manufacturing method of a welded structural member, the method including operations of:
preparing a first steel sheet and a second steel sheet;
forming a welded joint portion by arc welding the first steel sheet and the second steel sheet using any one of welding materials selected from a solid wire, a flux-cored wire, and a shielded metal arc welding rod; and
water cooling the same to an average cooling rate of 25 to 110° C/s, based on a surface temperature of the welded joint portion,
wherein at least one of the first steel sheet and the second steel sheet is a plated steel sheet having a Zn-Al-Mg-based plating layer.

### Advantageous Effects of Invention

As set forth, according to an aspect of the present disclosure, a welded structural member having excellent corrosion resistance and crack resistance and a manufacturing method thereof, may be provided.

Various and beneficial merits and effects of the present disclosure are not limited to the descriptions above, and may be more easily understood in a process of describing specific exemplary embodiments in the present disclosure.

### Brief description of drawings

FIG. 1 schematically illustrates cross-sections of a torch and a base material during arc welding.
FIG. 2 schematically illustrates a cross-sectional structure of a fillet welded joint portion.
FIG. 3 is an enlarged schematic diagram of a cross-sectional structure corresponding to a vicinity of the bead toe portion shown in FIG. 2.
FIG. 4 is an enlarged schematic diagram of a cross-sectional structure corresponding to a vicinity of a bead toe portion of a welded structural member manufactured using a conventional Zn-Al-Mg-based plated steel sheet.
FIG. 5 is a schematic cross-sectional view of a welded structural member obtained by applying water cooling to have a specific cooling rate based on a surface temperature of the welded joint portion in the state of FIG. 3, and manufactured using the Zn-Al-Mg-based plated steel sheet of the present disclosure.
FIG. 6 schematically illustrates a welding method in a test piece.
FIG. 7 is a photograph of a microstructure of a plating layer closest to the welded joint portion for Comparative Example 10 of the present application at 500x magnification captured with an optical microscope (OM).
FIG. 8 is a photograph of a microstructure of a plating layer closest to the welded joint portion for Inventive Example 2 of the present application at 500x magnification captured with an optical microscope (OM).

### Best Mode for Invention

Terms used in the present specification are for explaining specific exemplary embodiments rather than limiting the present disclosure. In addition, a singular form used in the present specification includes a plural form also, unless the relevant definition has a clearly opposite meaning thereto.

The meaning of "comprising" used in the specification is to embody the configuration and is not to exclude the presence or addition of other configurations.

Unless otherwise defined, all terms including technical terms and scientific terms used in the present specification have the same meaning as would be commonly understood by a person with ordinary skill in the art to which the present disclosure pertains. Pre-defined terms are interpreted as being consistent with the relevant technical literature and the disclosure herein.

Conventionally, when manufacturing a welded structural member using a plated steel sheet having a Zn-Al-Mg-based plating layer, an arc welding method has been commonly used. However, when using such an arc welding method, there was a problem in that a liquidus temperature of the plating layer was lowered due to the inclusion of Mg in the plated steel sheet on which a Zn-Al-Mg-based plating layer is formed, causing cracks to easily occur.

That is, during arc welding of the plated steel sheet, a plating layer is melted on a surface by arc heat passing through the plating layer. However, compared to a melting point of Zn of about 420°C, the Zn-Al-Mg-based plating layer has a lower liquidus temperature, so that the plating layer maintains a molten state for a relatively long time.

Accordingly, in the case of a plated steel sheet having a Zn-Al-Mg-based plating layer, compared to a galvanized steel sheet, a time for a metal of a molten plating layer to stay on a surface of the base steel sheet while maintaining a liquid phase becomes longer.

Therefore, when a surface of the base steel sheet, which is in a state of tensile stress during cooling immediately after arc welding, is exposed to the molten plating layer for a long time, the molten plating layer penetrates into grain boundaries of the base steel sheet, causing cracking. When cracks occur due to penetration of the molten plating layer, problems such as deterioration in strength, fatigue resistance, corrosion resistance, and the like, of the structure occurs.

Accordingly, when manufacturing a welded structural member using a plated steel sheet having a Zn-Al-Mg-based plating layer, the present inventors have intensively studied in depth to solve a problem in that cracks easily occur when welding was performed using an arc method, in particular, a solid wire, a flux cored wire, and a shielded metal arc welding rod.

As a result thereof, after welding is performed using the Zn-Al-Mg-based plated steel sheet, by precisely controlling cooling conditions and a composition of the welded joint portion, as a microstructure of a portion of the Zn-Al-Mg-based plating layer, closest to the welded joint portion, it was found that it may be controlled to include by area fraction, 20 to 40% of a Zn-Al-based intermetallic compound, and accordingly, cracks due to the penetration of the molten plating layer may be suppressed, and thus the present disclosure was provided.

First, a manufacturing method of a welded structural member will be described first. Specifically, the method for manufacturing the welded structural member according to an aspect of the present disclosure includes: preparing a first steel sheet and a second steel sheet, wherein at least one of the first steel sheet and the second steel sheet has a Zn-Al-Mg-based plating layer (or a Zn-Al-Mg-based plated steel sheet). Here, the plated steel sheet having the Zn-Al-Mg-based plating layer may include a base steel sheet; and a Zn-Al-Mg-based plating layer formed on at least one surface of the base steel sheet. In this case, an additional layer may be further included within a range that does not impair the object of the present disclosure.

Meanwhile, as the base steel sheet, various steel types may be employed according to the purpose of the present disclosure. For example, a high-strength steel sheet may be used, and a steel sheet having an overall average thickness of 1 to 6 mm may be used (in this case, a thickness direction for measuring the thickness refers to a direction perpendicular to a rolling direction). Although not particularly limited, as a representative example, a steel sheet having a composition of 94.5Zn-6.4Al-3.1Mg may be used as the base steel sheet.

In addition, among the first steel sheet and the second steel sheet, a counter steel sheet (that is, the remaining steel sheet) bonded to the Zn-Al-Mg-based plated steel sheet may be a Zn-Al-Mg-based plated steel sheet, or which may also be applied to all steel sheets other than the Zn-Al-Mg-based plated steel sheet. That is, the counter steel sheet may also various steel types depending on the purpose.

According to an aspect of the present disclosure, a manufacturing method of a welded structural member includes forming a welded joint portion by arc welding the first steel sheet and the second steel sheet using any one of welding materials selected from a solid wire, a flux-cored wire, and a shielded metal arc welding rod.

In the case of using the arc welding, a welded joint portion is formed using an additional welding material in addition to the first steel sheet and the second steel sheet corresponding to a base material. Therefore, since physical properties of the welded joint portion according to a change in a composition of the fine welded joint portion, as described above, in order to obtain a welded structural member having excellent corrosion resistance and crack resistance, when using the arc welding method, the composition of the welded joint portion is also precisely controlled.

Accordingly, in the case of using a solid wire as a welding material during the arc welding, the welded joint portion may include, by weight: 0.09 to 0.15% of C, 0.35 to 0.39% of Si, 0.87 to 0.90% of Mn, 0.004 to 0.022% of P, 0.002 to 0.014% of S, 0.01 to 0.11% of Cr, 0.01 to 0.08% of Ni, 0.01 to 0.06% of Cu, 0.01% or less of Mo, 0.01 to 0.02% of Al, with a balance of Fe and inevitable impurities.

In addition, in the case of using a flux cored wire as a welding material during the arc welding, the welded joint portion may include, by weight: 0.05 to 0.10% of C, 0.47 to 0.53% of Si, 1.10 to 1.16% of Mn, 0.009 to 0.025% of P, 0.007 to 0.018% of S, 0.03 to 0.13% of Cr, 0.02 to 0.11% of Ni, 0.02 to 0.08% of Cu, 0.02 to 0.07% of Mo, 0.005 to 0.02% of Al, with a balance of Fe and inevitable impurities.

In addition, in the case of using a shielded metal arc welding rod as a welding material during the arc welding, the welded joint portion may include, by weight: 0.06 to 0.14% of C, 0.42 to 0.49% of Si, 0.83 to 0.91% of Mn, 0.015 to 0.035% of P, 0.010 to 0.022% of S, 0.07 to 0.20% of Cr, 0.06 to 0.15% of Ni, 0.05 to 0.12% of Cu, 0.05 to 0.10% of Mo, 0.01 to 0.02% of Al, with a balance of Fe and inevitable impurities.

As described above, during the arc welding, by controlling the composition of the welded joint portion according to using each welding material to satisfy the above-described conditions, a welded structural member capable of effectively suppressing hot-dip metal embrittlement cracking and having excellent corrosion resistance of the welded joint portion and simultaneously having excellent crack resistance and bonding properties may be provided.

In this case, with respect to the arc welding, the solid wire, the flux cored wire, and the shielded metal arc welding rod, except for the above description, matters commonly known in the art may be equally applied to the present disclosure.

In addition, according to an aspect of the present disclosure, the operation of forming the welded joint portion may be performed with a heat input of 5 to 8kJ/cm. When the heat input is less than 5 kJ/cm, a problem of non-uniform welding bead formation or poor penetration may occur, and when the heat input exceeds 8 kJ/cm, there may be a problem of overlap or melt-through.

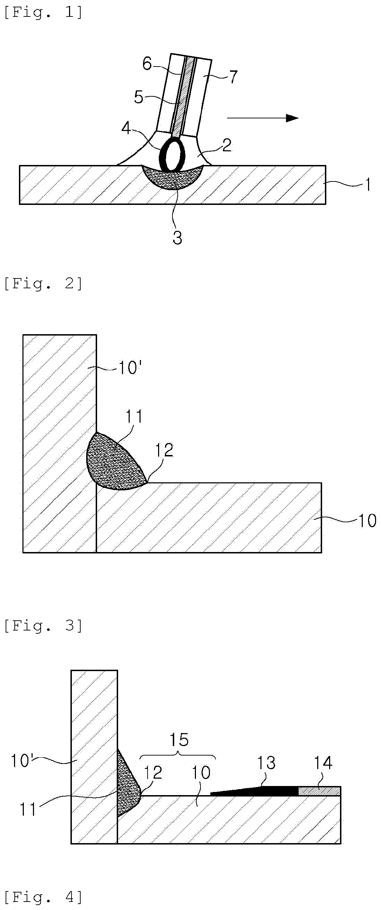

FIG. 1 schematically illustrates a cross-section of a torch during arc welding and a steel plate to be welded, used in the present disclosure. Specifically, the welding torch proceeds in a direction of the arrow while forming an arc 4 at a welded site 3 on a surface of a welded steel sheet 1. Shielding gas 2 is ejected from a gas nozzle around an electrode and a welding wire located in a central portion of the welding torch, thereby protecting the arc 4 and the surface of the welded steel sheet 1 exposed to a high temperature from an atmosphere. After the welding torch passes through a portion of the welded site 3 by heat input from the arc 4, it rapidly solidifies to form a weld bead (welded joint portion) composed of weld metal.

FIG. 2 schematically illustrates a cross-sectional structure of a welded joint portion formed in a manufacturing process of a welded structural member, and various types of welded joints by arc welding are used in construction, automobile structures, and the like.

That is, in FIG. 2, two steel sheets (i.e., a first steel sheet and a second steel sheet 10 and 10') to be welded are disposed overlapping each other, and a weld bead 11 is formed on a surface of one steel sheet 10 of the two steel sheets and an end surface of the other steel sheet 10' so that both steel sheets are bonded to each other. In this case, an edge intersection formed by meeting the surfaces of the two steel sheets 10 and 10' and the surface of the weld bead 11 is known as a bead toe portion 12.

Meanwhile, when manufacturing a welded structural member using a Zn-Al-Mg-based plated steel sheet using arc welding, most cracking problems occur in a vicinity of the above-described bead toe portion 12.

Accordingly, FIGS. 3 to 5 show schematic cross-sectional views in which a portion corresponding to the vicinity of the bead toe portion 12 shown in FIG. 2 is enlarged. Specifically, FIG. 3 schematically shows a cross-sectional state near a high-temperature weld zone immediately after arc heat passes during arc welding when manufacturing a welded structural member using a Zn-Al-Mg-based plated steel sheet. Although a surface of the steel sheet 10 before welding is covered with a uniform plating layer, a metal of the plating layer evaporates in the vicinity of the bead toe portion 12 and disappears due to the passage of the arc, thereby forming a plating layer evaporation section 15. On the other hand, in a portion at a certain distance from the bead toe portion 12, an original Zn-Al-Mg-based plating layer is melted and exists as a Zn-Al-Mg-based hot dipping layer 13. In addition, in a portion far from the bead toe portion 12, the original Zn-Al-Mg-based plating layer exists as a state of not being melted 14.

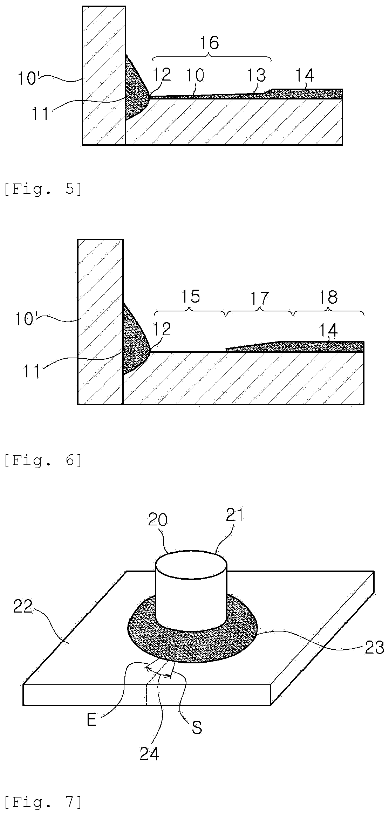

FIG. 4 schematically illustrates a cross-sectional view of a welded structural member conventionally manufactured using a Zn-Al-Mg-based plated steel sheet. In the case of FIG. 4, the Zn-Al-Mg-based plating layer disappears in a vicinity of a high-temperature weld zone immediately after arc heat passes during welding, and accordingly, a plating layer evaporation section 15 is formed as in FIG. 3. Thereafter, in the plating layer evaporation section 15, a Zn-Al-Mg-based hot dipping layer 13 is wet-diffused, and accordingly, an entire surface of the steel sheet 10 up to the bead toe portion 12 is covered with the Zn-Al-Mg-based hot dipping layer 13.

Therefore, in the case of a welded structural member manufactured using a conventional Zn-Al-Mg-based plated steel sheet, as illustrated in FIG. 4, all up to the vicinity of the bead toe portion 12 becomes a solidification region of the Zn-Al-Mg-based hot dipping layer 15. In this case, as described above, since the temperature of the metal liquidus line of the Zn-Al-Mg-based hot dipping layer is low, due to a cooling process after welding, a surface portion of the steel sheet 10 becoming a solidification region after cooling has a relatively long time, in contact with the Zn-Al-Mg-based hot dipping layer . Therefore, since a tensile stress is generated in the vicinity of the bead toe portion 12 of the steel sheet 10 due to cooling after welding, components in the Zn-Al-Mg-based hot dipping layer are likely to penetrate into grain boundaries of the steel sheet 10. For this reason, the components penetrating into the grain boundaries becomes a factor causing cracks in a welded joint portion.

Accordingly, the present inventors have found that it is possible to manufacture a welded structural member having excellent corrosion resistance and capable of suppressing occurrence of cracks, by performing water cooling while precisely controlling cooling conditions after the welding. For example, after the welding, water cooling may be performed to an average cooling rate of 25 to 110°C/s, based on a surface temperature of the welded joint portion.In this case, when the average cooling rate is less than 25°C/s, there is no short-time solidification effect of a hot dipping layer, and LME may occur. On the other hand, when the average cooling rate exceeds 110°C/s, based on the surface temperature of the welded joint portion, a problem of deterioration in toughness due to martensitic transformation of a material metal may occur.

Meanwhile, in FIG. 5, after welding is performed to have a welded joint portion having the composition of the present disclosure in the state of FIG. 3, water cooling may be performed to precisely control the surface temperature of the welded joint portion during cooling and simultaneously, to have a specific cooling rate, so that FIG. 5 schematically illustrates a cross-sectional view of a welded structural member manufactured using a Zn-Al-Mg-based plated steel sheet of the present disclosure.

As a result, the Zn-Al-Mg-based plating layer is evaporated and disappears immediately after welding, and the Zn-Al-Mg-based hot dipping layer solidifies without reaching the surface of the steel sheet of the plating layer evaporation section 15, so that wetting diffusion due to the Zn-Al-Mg-based hot dipping layer up to the bead toe portion 12 where stress is concentrated is suppressed. As a result thereof, the plating layer evaporation section 15 is maintained even after cooling. That is, cooling of the surface of the steel sheet in the vicinity of the bead toe portion 12 is finished without being in contact with the Zn-Al-Mg-based hot dipping layer , and accordingly, a certain section of the plating layer evaporation section 15 is secured between the solidification regions 17 of the Zn-Al-Mg-based hot dipping layer from the bead toe portion 12.

Therefore, penetration of molten metal components into the steel sheet is prevented in the vicinity of the bead toe portion 12, and thus a welded structural member having excellent crack resistance can be obtained regardless of the steel type of the steel sheet. In addition, in the Zn-Al-Mg-based hot dipping metal layer, in any welding position in which a height position of the hot dipping layer changes, wetting diffusion may be suppressed by the above-described effect. For example, the same may be applied to horizontal position welding, vertical position welding, overhead position welding, and the like, in addition to flat position welding.

That is, when manufacturing a welded structural member using a Zn-Al-Mg-based plated steel sheet, a Zn-Al-Mg-based plating layer evaporates and disappears in the vicinity of a weld bead formed during arc welding. Conventionally, after passing arc heat due to welding, wetting diffusion of a hot dipping layer formed by melting in a position several mm away from the weld bead immediately occurred in the vicinity of the weld bead.

That is, when manufacturing a welded structural member using a Zn-Al-Mg-based plated steel sheet, a Zn-Al-Mg-based plating layer evaporates and disappears in the vicinity of a weld bead formed during arc welding. Conventionally, after passing arc heat due to welding, wetting diffusion of a molten plating layer formed by melting in a position several mm away from the weld bead immediately occurred to the vicinity of the weld bead.

Specifically, in the present disclosure, it was found that diffusion of a Zn-Al-Mg-based plated steel sheet member was prevented by applying an optimized water cooling method within a critical time after passing through a welding torch.

That is, in the present disclosure, in a manufacturing method of a welded structural member obtained by welding two steel sheets, wherein at least one of which is a Zn-Al-Mg-based plated steel sheet, a welded structural member having excellent crack resistance may be effectively provided by performing water cooling within a few seconds immediately after welding (i.e., after passing through a welding torch).

Therefore, according to an aspect of the present disclosure, even during arc welding where cracks tend to occur, not only a welded structural member having excellent crack resistance and corrosion resistance and bonding properties may be effectively provided, but also, a welded structural member having the excellent characteristics described above may be relatively economically provided without limiting or adding elements of the plating layer.

In addition, according to an aspect of the present disclosure, a welded structural member having excellent crack resistance may be efficiently provided without any restriction on the type of steel for the base steel sheet of the Zn-Al-Mg-based plated steel sheet, so that it can be applied to a high-tensile strength steel sheet and it can be applied without restriction on the shape or size of parts.

Specifically, according to an aspect of the present disclosure, water cooling may be initiated within 3 to 10 seconds after passing through a welding torch, more preferably within 3 to 9 seconds. By setting an initiation time of water cooling to 3 seconds or more after passing through the welding torch, welding performance can be secured because it is a critical time not affecting a progressing torch. In addition, by setting the initiation time of the water cooling to 10 seconds or less after passing through the welding torch, crack resistance can be secured by preventing the hot dipping layer generated after passing through the welding torch from progressing to the vicinity of the welding bead.

In addition, according to an aspect of the present disclosure, a flow rate of the water cooling may be 15 to 60 mm³/hr. By setting the flow rate of the water cooling to 15mm³/hr or more, a cooling effect of the hot dipping layer generated after passing through the welding torch can be sufficiently secured. In addition, by setting the flow rate of the water cooling to 60 mm³/hr or less, it is possible to prevent contamination of a work environment due to unnecessary flow rate supply and also to suppress problems caused by excessive cooling.

In addition, according to an aspect of the present disclosure, the water cooling may be maintained for 5 to 15 seconds. By setting a maintaining time of the water cooling to 5 seconds or longer, a cooling effect of the hot dipping layer due to water cooling can be sufficiently secured, so that an effect of improving crack resistance can be secured. By setting the maintaining time of the water cooling to 15 seconds or shorter, not only can contamination of working environments due to an unnecessary flow rate supply be prevented, but also a problem caused by excessive cooling can be suppressed.

That is, according to an aspect of the present disclosure, it is most preferable that the flow rate of cooling water is supplied to a portion through which the torch passes for 5 to 15 seconds at a water cooling rate of 15 to 60mm³/hr within 3 to 10 seconds after passing through the welding torch.

Alternatively, according to an aspect of the present disclosure, as described above, in order to control a cooling rate of the welded joint portion, at the same time as controlling the various cooling conditions described above, after passing through the welding torch, water controlled to a temperature in a range of 5 to 38°C within 3 to 10 seconds may be sprayed onto a surface of the welded joint portion. In this case, a size of the water droplets sprayed onto the welded joint portion may be controlled to be in a range of 20 to 100 µm.

A welded structural member according to an aspect of the present disclosure includes a first steel sheet; a second steel sheet; and a welded joint portion bonding the first steel sheet and the second steel sheet. Here, the description of the manufacturing method of the welded structural member described above can be equally applied to the first steel sheet, the second steel sheet, and the welded joint portion.

In addition, in the welded structure, a microstructure of a portion of the Zn-Al-Mg-based plating layer, closest to the welded joint portion includes, by area fraction: 20 to 40% of a Zn-Mg-based intermetallic compound.

In the present disclosure, the portion of the Zn-Al-Mg-based plating layer, closest to the welded joint portion may refer to a region from a region of the Zn-Al-Mg-based plating layer, closest to the welded joint portion to a point at 10 mm in a rolling direction of the steel sheet, except for a region 'from a bead toe portion of the welded joint portion, corresponding to the plating layer evaporation section 15, to a region where no plating layer exists.'

Therefore, the microstructure of the portion closest to the welded joint portion may be measured by observing a cutting surface in a thickness direction (i.e., a direction perpendicular to a rolling direction of the steel sheet) with respect to a region from the region closest to the welded joint portion of the Zn-Al-Mg-based plating layer described above to a point at which it is 10 mm, captured with an optical microscope (OM) at a magnification of 500 times.

According to an aspect of the present disclosure, the Zn-Mg-based intermetallic compound refers to an intermetallic compound including Zn and Mg, which is a secondary phase, formed in addition to the Zn single phase corresponding to a base structure, as the Zn-Al-Mg-based hot dipping layer formed immediately after arc welding in the present disclosure is rapidly cooled by a subsequent water cooling process. In this case, the Zn-Mg-based intermetallic compound may further include components such as Al in addition to Zn and Mg, and for example, a Zn/MgZn₂ binary phase, a Zn/MgZn₂ /Al ternary phase, and the like.

In addition, according to an aspect of the present disclosure, a microstructure of the portion closest to the welded joint portion of the Zn-Al-Mg-based plating layer includes by area fraction, 20 to 40% (more preferably 24 to 38%) of the above-described Zn-Mg-based intermetallic compound. In the present disclosure, when the area fraction of the Zn-Mg-based intermetallic compound is less than 20%, it is difficult to expect an effect of preventing LME, and when the area fraction thereof exceeds 40%, a welded structural member desired in the present disclosure having both excellent corrosion resistance and crack resistance may not be manufactured.

In addition, according to an aspect of the present disclosure, a microstructure of a portion closest to the welded joint portion of the Zn-Al-Mg-based plating layer may include, by area fraction, a Zn single phase as a base structure in area fraction, for example, the Zn single phase at 60% or more.

According to an aspect of the present disclosure, a microstructure of a portion closest to the welded joint portion of the Zn-Al-Mg-based plating layer is formed differently from a microstructure of a Zn-Al-Mg-based plating layer which was not melted from the beginning (i.e., a portion other than the portion closest to the welded joint portion of the Zn-Al-Mg-based plating layer.

That is, the above-described Zn-Al-Mg-based hot dipping layer formed immediately after arc welding is rapidly cooled by a water-cooling process in which the cooling conditions are precisely controlled as described above, to form a microstructure, which is different from that of the Zn-Al-Mg-based plating layer which was not melted from the beginning. In this case, in the portion closest to the welded joint portion, an average diameter of a Zn-Mg-based intermetallic compound may be in a range of 1 to 30 µm, based on a cutting surface in a thickness direction (meaning a direction perpendicular to a rolling direction of the steel sheet). Among the Zn-Al-Mg-based plating layers formed with such cooling, the microstructure of the portion closest to the welded joint portion satisfies the above-described characteristics, so that hot-dip metal embrittlement cracking may be effectively suppressed, and accordingly, a welded structural member having excellent corrosion resistance, and at the same time, having excellent crack resistance and bonding properties may be obtained.

According to an aspect of the present disclosure, hardness of a portion of the Zn-Al-Mg-based plating layer, closest to the welded joint portion may be 69.5% or more (100% or less) as compared to hardness of the plating layer before welding. Here, the hardness of the plating layer, closest to the welded joint portion indicates a value obtained by measuring the hardness of the plating layer at a point closest to the bead toe portion 12.

In addition, according to an aspect of the present disclosure, a distance between a bead toe portion 12 of the welded joint portion and a plating layer (corresponding to a plating layer evaporation section 15) may be 3 to 10 mm, and a length of the plating layer evaporation section 15 may be controlled by applying a water cooling method to meet an average cooling rate in a specific range immediately after welding.

Specifically, according to an aspect of the present disclosure, by setting the length of the plating layer evaporation section 15 to 3 mm or more, occurrence of cracks due to a hot dipping metal layer in a vicinity of the bead toe portion 12 may be prevented, so that crack resistance may be secured. By setting the length of the plating layer evaporation section to 10 mm or less, an effect of securing corrosion resistance may be obtained by forming a plating layer.

Meanwhile, according to an aspect of the present disclosure, the Zn-Al-Mg-based plating layer may include, by weight: 1 to 20.9% of Al, 0.04 to 10% of Mg, 0.1% or less (including 0%) of Ti, 0.05% or less (including 0%) of B, 2% or less (including 0%) of Si, 2.5% or less (including 0%) of Fe, with a balance of Fe and inevitable impurities. In addition, in the present disclosure, by setting the composition of the plating layer as described above, the object of the present disclosure, of securing crack resistance during welding may be more effectively achieved.

In addition, according to an aspect of the present disclosure, a plating adhesion amount of the Zn-Al-Mg-based plating layer per side may be 50 to 250g/m². Corrosion resistance of the plated steel sheet can be ensured by setting the plating adhesion amount of the plating layer per side to be 50g/m² or more, and by setting the coating weight per side of the plating layer to be 250g/m² or less, occurrence of blowholes can be prevented during welding and strength of a weld zone can be secured.

That is, by controlling a plating adhesion amount of the plating layer per side to be an appropriate amount or more, an effect of the corrosion resistance of the plating layer may be sufficiently secured, and an anti-corrosion effect by a sacrificial action of the plating layer may be sufficiently obtained.

Therefore, as in the present disclosure, when a plating layer evaporation section occurs in a vicinity of a weld bead generated after passing through a welding torch, it is preferable to control the plating adhesion amount of the plating layer per side to 50 to 250 g/m², and it is more preferable to control the plating adhesion amount of the plating layer per side to 50 to 200 g/m².

Meanwhile, the composition of the plating layer described above almost reflects the composition for hot dipping, and although a method for hot dipping is not particularly limited, it is preferable to use a generally known in-line annealing-type hot dipping facility from an economical point of view.

Hereinafter, a component system of the plating layer will be preferentially described. In this case, a unit of content of each of the following components is weight %.

### Al: 1 to 20.9%

Al improves corrosion resistance of a plated steel sheet and suppresses generation of Mg oxide-based dross in a plating bath. In order to obtain such an effect, it is necessary to secure an Al content of 1% or more. By setting the Al content to 1% or more, it is possible to secure corrosion resistance and an effect of preventing dross, and by setting the Al content to 20.9 % or less, overgrowth of a soft Fe-Al alloy layer on a base of the plating layer may be prevented to secure plating adhesion.

### Mg: 0.04 to 10%

Mg produces a uniform corrosion product on a surface of the plating layer to remarkably improve corrosion resistance of a plated steel sheet. Meanwhile, when the Mg content is 0.04% or more, an effect of improving corrosion resistance may be secured, and when the Mg content is 10% or less, generation of Mg oxide-based dross may be suppressed so that it is possible to secure quality of the plating layer. In addition, it is more preferable that the Mg content is 1% to 5%.

### Ti: 0 to 0.1%

When Ti is contained in a hot dipping bath, there is an advantage of increasing an alloy range of other components during hot dipping, to expand a degree of freedom of manufacturing conditions. Meanwhile, by containing 0.1% or less of Ti, an effect of increasing the alloy range of other components may be exhibited. In addition, it is more effective that the Ti content is 0.0005 to 0.005%, and when the Ti content is 0.005% or more, there may be an effect of increasing the alloy range of other components. On the other hand, by setting the Ti content to 0.005% or less, it is possible to suppress appearance defects on a surface of the plating layer due to formation of precipitates.

### B: 0 to 0.05%

By adding B in a hot dipping bath and increasing an alloy range of other components during hot dipping, there is an advantage of expanding a degree of manufacturing conditions. Meanwhile, by containing 0.1% or less of B, the effect of increasing the alloy range of other components may be exhibited. In addition, it may be more effective that the B content is 0.0001 to 0.005%, and when the B content is 0.0001% or more, there is an effect of increasing the alloy range of other components. On the other hand, when the B content is 0.05% or less, it is possible to suppress appearance defects on a surface of the plating layer due to formation of precipitates.

### Si: 0 to 20

When Si is contained in a hot dipping bath, excessive growth of an Fe-Al alloy layer formed at an interface between the surface of a plating disc and a plating layer is suppressed, and it is advantageous in improving workability of a hot-dip Zn-Al-Mg-based plated steel sheet. Therefore, by setting the Si content to be 2% or less, the above-described effect of improving the workability of the plated steel sheet can be exhibited. Meanwhile, it is more effective to set the Si content to be 0.005 to 2%, by setting the Si content to be 0.005% or more, an effect of suppressing overgrowth of the Fe-Al alloy layer may be exhibited, and by setting the Si content to be 2% or less, an increase in an amount of dross in the hot dipping bath may be suppressed.

### Fe: 0 to 2.5%

In a hot dipping bath, Fe tends to mix due to the nature of immersing a steel sheet. Therefore, Fe may be included in the plating layer in a content of 2.5% or less, and corrosion resistance and quality of a plated steel sheet may be secured by setting the Fe content to 2.5% or less. Therefore, Fe may be included in the plating layer in a content of 2.5% or less, and corrosion resistance and quality of a plated steel sheet may be secured by setting the Fe content to 2.5% or less.

Hereinafter, a plated steel sheet according to an aspect of the present disclosure will be described in detail. A content of each element in the present disclosure is by wt%, unless otherwise particularly defined.

### Mode for Invention

### (Example)

Hereinafter, the present disclosure will be specifically described through the following Examples. However, it should be noted that the following examples are only for describing the present disclosure by illustration, and not intended to limit the right scope of the present disclosure. The reason is that the right scope of the present disclosure is determined by the matters described in the claims and reasonably inferred therefrom.

### (Experimental Example 1)

A cold-rolled steel strip having a sheet thickness of 1.5 mm and a sheet width of 1000 mm having the composition of Table 1 were passed through a hot dipping line showing the composition of Table 3 to produce a hot-dip Zn-Al-Mg-based plated steel sheet having various plating layer compositions.

Subsequently, arc welding was performed under the welding conditions shown in Table 2 below, and resistance to hot-dip metal embrittlement cracking was investigated. In addition, Tables 3 and 4 show a composition of the plating layer, a plating adhesion amount, water cooling conditions, and a hardness value.

**[Table 1]**

| | | | | | | | | |
|---|---|---|---|---|---|---|---|---|
| Component (weight %) | C | Si | Mn | Al | Ni | Cr | Mo | Characteristics High tensile strength having a level of 400MPa |

**[Table 2]**

| | | | | |
|---|---|---|---|---|
| Hot-dip Zn-Al-Mg-based alloy plated steel sheet | Compositio n of plating layer | Plating having a Zn alloy composition of 650 or more (additional composition range Al:1.0 to 20.0%, Mg:0.05 to 10.0%, Ti:0 to 0.10%, B:0 to 0.05%, Si:0 to 2.0%, Fe:0 to 2.5%) | | |
| | Plated steel sheet | Low carbon steel | | |
| | Size | Sheet thickness 1.5mm, Sheet width 200mm, Sheet length 200mm | | |
| | Plating adhesion amount | 50 to 250g/m² per side | | |
| Welding process | | Metal gas arc welding | Flux cored welding | Shielded metal arc welding |
| Type of welding wires | | Solid wire | Flux-cored wire | Shielded metal arc welding rod |
| Name of welding wires / Diameter | | KC-25M / 1.2 mmΨ | K-71T / 1. 2 mmΨ | KR-3000 / 2.6 mmΨ |
| Welding gas | | 80% Ar + 20% CO₂ | 80% Ar + 20% CO₂ | - |
| Flow rate of welding gas | | 15 L/min | 15 L/min | - |
| Welding current | | 150A | 180A | 150A |
| Welding voltage | | 20V | 20V | - |
| Welding speed | | 0.5 m/min | 0.5 m/min | 0.8 m/min |
| Bead length | | 300 mm | 300 mm | 300 mm |
| Welding heat input | | 3.6 kJ/cm | 4.3 kJ/cm | 3.9 kJ/cm |

Table 4 shows the results of crack occurrence and a hardness value change rate for the above-described experiment. When the conditions specified in the present disclosure are satisfied, it can be confirmed that a length of a plating layer evaporation section 15 is secured to be 3 to 10 mm, and liquefied metal embrittlement cracking is prevented.

When the conditions specified in the present disclosure are satisfied, it can be confirmed that a length of a plating layer evaporation section 15 is secured to be 3 to 10 mm, and liquefied metal embrittlement cracking is prevented.

As shown in FIG. 6, arc welding was performed at the center of a 200 mm × 200 mm test piece (hot-dip Zn-Al-Mg-based plated steel sheet member) under the welding conditions shown in Table 2 to weld between test pieces. As shown in FIG. 6, arc welding was performed at the center of a 200 mm × 200 mm test piece (hot-dip Zn-Al-Mg-based plated steel sheet member) under the welding conditions shown in Table 2 to weld between test pieces. During welding, a test piece 22 was maintained) in a state of being restrained on a flat plate. This test was conducted in a situation in which hot-dip metal embrittlement cracking was easily occur by providing restraining conditions.

After welding, a radioactive nondestructive test was conducted to determine whether or not hot-dip metal embrittlement cracking occurred and the results were shown in Table 4 based on the following criteria.
⊚: No cracks
∘: There were only traces of surface cracks of 5 µm or less, and there was almost no occurrence of cracks
×: Surface cracks exceeding 5 um and propagated cracks occurred

### [Method for measuring length and change rate of hardness value of plating layer evaporation section]

After performing mirror polishing and etching in a nitric acid concentration of 0.2% by volume nitrate solution on a cross-section perpendicular to a direction of a bead including a weld bead and a steel sheet adjacent thereto, it was observed with a scanning electron microscope. A length of a plating layer evaporation section 15 shown in FIG. 5 was measured by observing a vicinity of a bead toe portion 12, and in addition, hardness of a plating layer the vicinity of the bead toe portion 12 after welding and hardness of a plating layer before welding were measured, and a change rate thereof was shown in Table 4 below.

In addition, in order to observe a microstructure of the portion closest to the welded joint portion of the Zn-Al-Mg-based plating layer, after taking a cross-sectional specimen thereof in a thickness direction with an optical microscope (OM) at 500 times magnification, area fractions of a Zn-Mg-based intermetallic compound including a binary phase of Zn/MgZn₂ and a ternary phase of Zn/MgZn₂/Al and a Zn single phase (including 70% or more of Zn) were measured. In addition, a tensile strength (YS) of the welded joint portion was measured and shown in Table 5 below. Meanwhile, in the tables below, a blank indicates a case of '0.'

**[Table 3]**

| Division | Composition of Zn-Al-Mg-based plating layer (mass %, a remainder of Zn) | | | | | |
|---|---|---|---|---|---|---|
| | Al | Mg | Si | Ti | B | Fe |
| Inventiv e Example 1 | 4.5 | 0.05 | | | | |
| Inventiv e Example 2 | 4.5 | 0.05 | | | | |
| Inventiv e Example 3 | 4.5 | 0.05 | | | | |
| Comparat ive Example 1 | 6.4 | 3.1 | 0.5 | 0.05 | 0.02 | |
| Comparat ive Example 2 | 19.1 | 8.9 | 0.5 | | | 0.3 |
| Comparat ive Example 3 | 4.4 | 1.2 | 0.5 | | | |

**[Table 4]**

| Division | Plating layer hardness before welding ( Hv) | Plating adhesio n amount (g/m²) | Test conditions | |
|---|---|---|---|---|
| | | | Type or welding wires | Average cooling rate (° C/s) |
| Inventive Example 1 | 114.2 | 50 | Solid wire | 85.8 |
| Inventive Example 2 | 114.2 | 50 | Flux-cored wire | 85.2 |
| Inventive Example 3 | 114.2 | 50 | Shielded metal arc welding rod | 106.9 |
| Comparati ve Example 1 | 148.4 | 135 | Solid wire | 14.8 |
| Comparati ve Example 2 | 205.9 | 135 | Flux-cored wire | 12.8 |
| Comparati ve Example 3 | 130.6 | 183 | Shielded metal arc welding rod | 11.3 |

**[Table 5]**

| Division | Portion of the Zn-Al-Mg-based plating layer, closest to the welded joint portion | | Whether or not cracks occur | Change rate of hardness of plating layer after welding (%) |
|---|---|---|---|---|
| | Area fraction of a Zn-Mg-based intermetallic compound(%) | Area fraction of a Zn single phase (%) | | |
| Inventiv e example 1 | 35.1 | 64.9 | ⊚ | 87.2 |
| Inventiv e example 2 | 28.3 | 71.7 | ⊚ | 75.5 |
| Inventiv e example 3 | 25.7 | 74.3 | ⊚ | 73.7 |
| Comparat ive example 1 | 11.2 | 88.8 | X | 55.2 |
| Comparat ive example 2 | 8.7 | 91.3 | X | 53.1 |
| Comparat ive example 3 | 5.3 | 94.7 | X | 53.2 |

As can be seen in Tables 3 to 5, in Inventive Examples 1 to 3 in which a microstructure of a portion the Zn-Al-Mg-based plating layer defined in the present disclosure, closest to the welded joint portion, includes a Zn-Mg-based intermetallic compound at 20 to 40% and a Zn single phase at 60% or more, as compared to Comparative Examples 1 to 3 not satisfying this, it was confirmed that crack resistance was also excellent, and a change rate of a hardness value before and after welding was also 69.5%, confirming that corrosion resistance was also excellent.

### (Experimental Example 2)

Except for changing the conditions described in Tables 5 to 8 below, it was evaluated in the same manner as in Experimental Example 1 described above. In addition, in a welded structural member obtained through the following method, a composition range of the welded joint portion for each case using a solid wire, a flux-cored wire, and a shielded metal arc welding rod was measured with an emission spectrometer and shown in Table 6 below. Meanwhile, in the tables below, a blank indicates a case of '0.'

**[Table 6]**

| Component (we ight %) | C | Si | Mn | P | S | Cr | Ni | Cu | Mo | Al |
|---|---|---|---|---|---|---|---|---|---|---|
| Solid wire | 0.13 | 0.40 | 0.87 | 0.012 | 0.01 | 0.021 | 0.013 | 0.015 | - | 0.02 |
| Flux cored wire | 0.09 | 0.48 | 1.15 | 0.022 | 0.009 | 0.042 | 0.028 | 0.021 | 0.02 | 0.01 2 |
| Shielded arc welding rod | 0.08 | 0.45 | 0.91 | 0.02 | 0.02 | 0.09 | 0.08 | 0.05 | 0.05 | 0.01 |

| | | | | | | | | | | |
|---|---|---|---|---|---|---|---|---|---|---|
| (a remainder of Fe and inevitable impurities) | | | | | | | | | | |

**[Table 7]**

| Division | Composition of a Zn-Al-Mg-based plating layer (mass %, a remainder of Zn) | | | | | |
|---|---|---|---|---|---|---|
| | Al | Mg | Si | Ti | B | Fe |
| Inventive example 4 | 6.4 | 3.1 | 0.5 | 0.05 | 0.02 | |
| Inventive example 5 | 19.9 | 9.8 | 0.5 | 0.02 | 0.01 | 0.6 |
| Inventive example 6 | 6.7 | 3.1 | 1.5 | | | 0.4 |
| Inventive example 7 | 6.5 | 3.3 | 0.5 | 0.04 | 0.01 | |
| Inventive example 8 | 14.8 | 7.6 | 1.5 | | | 2 |
| Inventive example 9 | 18.1 | 8.3 | 2 | | | 2.3 |
| Inventive example 10 | 19.1 | 8.9 | 0.5 | | | 0.3 |
| Inventive example 11 | 4.8 | 0.06 | 0.8 | 0.1 | 0.02 | |
| Inventive example 12 | 14.3 | 5.1 | | 0.05 | | |
| Inventive example 13 | 0.5 | 1.6 | | | | |
| Inventive example 14 | 6.2 | 2.9 | | | 0.1 | |
| Inventive example 15 | 20.5 | 9.5 | | | 0.3 | |
| Inventive example 16 | 4.5 | 1.1 | | | 0.5 | |
| Inventive example 17 | 8.3 | 2.5 | 2.7 | | | |
| Inventive example 18 | 21 | 9.9 | | 0.11 | 0.01 | |
| Inventive example 19 | 6.3 | 3 | 0.5 | 0.12 | 0.01 | |
| Inventive example 20 | 15.3 | 6.8 | | | | 1.5 |
| Inventive example 21 | 5.5 | 0.9 | | | | |
| Inventive example 22 | 21.5 | 8.1 | | | | 2.7 |
| Inventive example 23 | 18 | 9.2 | 1.3 | 0.15 | | 1.2 |
| Inventive example 24 | 6.4 | 3.1 | 0.5 | 0.05 | 0.02 | |
| Inventive example 25 | 4.5 | 0.04 | 0.3 | | | 0.5 |
| Inventive example 26 | 6.7 | 3.1 | 1.5 | | | 0.4 |
| Inventive example 27 | 6.5 | 3.3 | 0.5 | 0.04 | 0.01 | |
| Inventive example 28 | 11.2 | 2.8 | 0.2 | | | |
| Inventive example 29 | 14.3 | 5.1 | | 0.05 | | |
| Inventive example 30 | 14.8 | 7.6 | 1.5 | | | 2 |
| Inventive example 31 | 4.8 | 0.06 | 0.8 | 0.1 | 0.02 | |
| Inventive example 32 | 13.8 | 9.3 | | | | |
| Inventive example 33 | 20.9 | 9.8 | 0.5 | 0.02 | 0.01 | 0.6 |
| Inventive example 34 | 18.1 | 8.3 | 2 | | | 2.3 |
| Inventive example 35 | 0.5 | 1.6 | | | | |
| Inventive example 36 | 6.2 | 2.9 | | | 0.1 | |
| Inventive example 37 | 20.5 | 9.5 | | | 0.3 | |
| Inventive example 38 | 4.5 | 1.1 | | | 0.5 | |
| Inventive example 39 | 8.3 | 2.5 | 2.7 | | | |
| Inventive example 40 | 21 | 9.9 | | 0.11 | 0.01 | |
| Inventive example 41 | 6.3 | 3 | 0.5 | 0.12 | 0.01 | |
| Inventive example 42 | 15.3 | 6.8 | | | | 1.5 |
| Inventive example 43 | 5.5 | 0.9 | | | | |
| Inventive example 44 | 21.5 | 8.1 | | | | 2.7 |
| Inventive example 45 | 18 | 9.2 | 1.3 | 0.15 | | 1.2 |
| Inventive example 46 | 4.5 | 0.04 | 0.3 | | | 0.5 |
| Inventive example 47 | 6.5 | 3.3 | 0.5 | 0.04 | 0.01 | |
| Inventive example 48 | 11.2 | 2.8 | 0.2 | | | |
| Inventive example 49 | 4.8 | 0.06 | 0.8 | 0.1 | 0.02 | |
| Inventive example 50 | 12 | 4.9 | 2 | | | 2.3 |
| Inventive example 51 | 11.5 | 4.1 | 0.5 | 0.02 | 0.01 | 0.6 |
| Inventive example 52 | 10.3 | 3.9 | | 0.05 | | |
| Inventive example 53 | 0.5 | 1.6 | | | | |
| Inventive example 54 | 20.5 | 9.5 | | | 0.3 | |
| Inventive example 55 | 4.5 | 1.1 | | | 0.5 | |
| Inventive example 56 | 8.3 | 2.5 | 2.7 | | | |
| Inventive example 57 | 15.3 | 6.8 | | | | 1.5 |
| Inventive example 58 | 5.5 | 0.9 | | | | |
| Inventive example 59 | 21.5 | 8.1 | | | | 2.7 |
| Comparati ve example 4 | 17.5 | 7.1 | | | | |
| Comparati ve example 5 | 12.5 | 0.04 | 0.3 | | 0.03 | |
| Comparati ve example 6 | 6.7 | 1.2 | 1.5 | | | 0.4 |
| Comparati ve example 7 | 6.5 | 3.3 | 0.5 | 0.04 | 0.01 | |
| Comparati ve example 8 | 6.3 | 2.5 | 1.2 | 0.04 | 0.01 | |
| Comparati ve example 9 | 4.4 | 1.2 | 0.5 | | | |
| Comparati ve example 10 | 6.3 | 2.5 | 1.2 | 0.04 | 0.01 | |
| Comparati ve example 11 | 21.5 | 8.1 | | | | 2.7 |
| Comparati ve example 12 | 14.3 | 5.1 | | 0.05 | | |
| Comparati ve example 13 | 6.3 | 3 | 0.5 | 0.12 | 0.01 | |
| Comparati ve example 14 | 4.8 | 0.06 | 0.8 | 0.1 | 0.02 | |
| Comparati ve example 15 | 6.7 | 1.2 | 1.5 | | | 0.4 |
| Comparati ve example 16 | 6.5 | 3.3 | 0.5 | 0.04 | 0.01 | |
| Comparati ve example 17 | 6.7 | 3.1 | 1.5 | | | 0.4 |
| Comparati ve example 18 | 20.5 | 9.5 | | | 0.3 | |
| Comparati ve example 19 | 14.3 | 5.1 | | 0.05 | | |
| Comparati ve example 20 | 5.5 | 0.9 | | | | |
| Comparati ve example 21 | 17.5 | 7.1 | | | | |

**[Table 8]**

| Divis ion | Plati ng layer hardn ess befor e weldi ng (Hv) | Plati ng adhes ion amoun t (g/m² ) | Types of welding wires | Time taken for water cooling to start after welding (sec.) | Flow rate (mm³/ hr) | Water cooli ng holdi ng time (sec. ) | Cooli ng rate (° C/s) | Whet her or not crac ks occu r | Change rate of hardne ss of platin 9 layer after weldin 9 (%) |
|---|---|---|---|---|---|---|---|---|---|
| Inven tive examp le 4 | 148.4 | 135 | Solid wire | 9 | 31 | 10 | 45.4 | ⊚ | 71.4 |
| Inven tive examp le 5 | 218.2 | 60 | Solid wire | 8 | 28 | 5 | 49.5 | ⊚ | 73.5 |
| Inven tive examp le 6 | 166.1 | 110 | Solid wire | 3 | 55 | 13 | 85.7 | ⊚ | 88.1 |
| Inven tive examp le 7 | 149.9 | 85 | Solid wire | 5 | 45 | 8 | 66.9 | ⊚ | 83.2 |
| Inven tive examp le 8 | 228.7 | 65 | Solid wire | 10 | 21 | 9 | 41.8 | ⊚ | 73.4 |
| Inven tive examp le 9 | 246.6 | 125 | Solid wire | 8 | 15 | 5 | 49.3 | ⊚ | 70.1 |
| Inven tive examp le 10 | 205.9 | 67 | Solid wire | 6 | 60 | 8 | 60.2 | ⊚ | 71.0 |
| Inven tive examp le 11 | 126.6 | 148 | Solid wire | 10 | 12 | 3 | 41.6 | ○ | 69.0 |
| Inven tive examp le 12 | 161.7 | 175 | Solid wire | 5 | 48 | 11 | 66.9 | ⊚ | 76.3 |
| Inven tive examp le 13 | 125.8 | 34 | Solid wire | 8 | 13 | 15 | 49.5 | ○ | 65.2 |
| Inven tive examp le 14 | 140.5 | 92 | Solid wire | 15 | 35 | 11 | 29.6 | ○ | 54.0 |
| Inven tive examp le 15 | 204.9 | 180 | Solid wire | 5 | 33 | 1 | 66.8 | ○ | 61.3 |
| Inven tive examp le 16 | 129.8 | 45 | Solid wire | 8 | 11 | 4 | 49.4 | ○ | 63.3 |
| Inven tive examp le 17 | 172.2 | 80 | Solid wire | 13 | 35 | 8 | 33.6 | ○ | 62.1 |
| Inven tive examp le 18 | 206.1 | 40 | Solid wire | 3 | 5 | 11 | 83.4 | ○ | 69.3 |
| Inven tive examp le 19 | 148.3 | 25 | Solid wire | 4 | 31 | 3 | 75.3 | ○ | 68.1 |
| Inven tive examp le 20 | 195.7 | 290 | Solid wire | 12 | 38 | 7 | 36.1 | ○ | 61.0 |
| Inven tive examp le 21 | 121.9 | 240 | Solid wire | 12 | 50 | 10 | 36.0 | ○ | 57.3 |
| Inven tive examp le 22 | 225.1 | 155 | Solid wire | 8 | 35 | 1 | 49.5 | ○ | 65.2 |
| Inven tive examp le 23 | 232.4 | 180 | Solid wire | 4 | 32 | 3 | 75.0 | ○ | 59.1 |
| Inven tive examp le 24 | 148.4 | 135 | Flux-cored wire | 5 | 31 | 10 | 66.7 | ⊚ | 70.2 |
| Inven tive examp le 25 | 124.7 | 89 | Flux-cored wire | 6 | 35 | 15 | 59.4 | ⊚ | 70.5 |
| Inven tive examp le 26 | 166.1 | 110 | Flux-cored wire | 3 | 55 | 13 | 85.4 | ⊚ | 75.9 |
| Inven tive examp le 27 | 149.9 | 85 | Flux-cored wire | 5 | 45 | 8 | 66.5 | ⊚ | 72.5 |
| Inven tive examp le 28 | 142.9 | 55 | Flux-cored wire | 7 | 38 | 10 | 53.8 | ⊚ | 70.0 |
| Inven tive examp le 29 | 161.7 | 175 | Flux-cored wire | 5 | 48 | 11 | 66.9 | ⊚ | 70.7 |
| Inven tive examp le 30 | 228.7 | 65 | Flux-cored wire | 6 | 21 | 9 | 58.2 | ⊚ | 69.6 |
| Inven tive examp le 31 | 126.6 | 148 | Flux-cored wire | 10 | 12 | 3 | 40.0 | ○ | 60.7 |
| Inven tive examp le 32 | 196.5 | 161 | Flux-cored wire | 6 | 31 | 7 | 57.7 | ⊚ | 70.3 |
| Inven tive examp le 33 | 218.6 | 60 | Flux-cored wire | 8 | 28 | 5 | 47.3 | ⊚ | 70.2 |
| Inven tive examp le 34 | 246.6 | 125 | Flux-cored wire | 8 | 15 | 5 | 48.1 | ⊚ | 69.5 |
| Inven tive examp le 35 | 125.8 | 34 | Flux-cored wire | 8 | 13 | 15 | 47.4 | ○ | 67.1 |
| Inven tive examp le 36 | 140.5 | 92 | Flux-cored wire | 15 | 35 | 11 | 28.0 | ○ | 57.4 |
| Inven tive examp le 37 | 204.9 | 180 | Flux-cored wire | 5 | 33 | 1 | 64.4 | ○ | 68.8 |
| Inven tive examp le 38 | 129.8 | 45 | Flux-cored wire | 8 | 11 | 4 | 47.6 | ○ | 66.2 |
| Inven tive examp le 39 | 172.2 | 80 | Flux-cored wire | 13 | 35 | 8 | 32.0 | ○ | 60.4 |
| Inven tive examp le 40 | 206.1 | 40 | Flux-cored wire | 7 | 5 | 11 | 55.4 | ○ | 67.5 |
| Inven tive examp le 41 | 148.3 | 25 | Flux-cored wire | 7 | 20 | 3 | 55.3 | ○ | 68.8 |
| Inven tive examp le 42 | 195.7 | 290 | Flux-cored wire | 12 | 38 | 7 | 34.4 | ○ | 56.8 |
| Inven tive examp le 43 | 121.9 | 240 | Flux-cored wire | 12 | 50 | 10 | 34.6 | ○ | 59.2 |
| Inven tive examp le 44 | 225.1 | 155 | Flux-cored wire | 8 | 35 | 1 | 47.6 | ○ | 65.3 |
| Inven tive examp le 45 | 232.4 | 180 | Flux-cored wire | 4 | 20 | 3 | 72.7 | ○ | 69.2 |
| Inven tive examp le 46 | 124.7 | 89 | Shielded metal arc welding rod | 4 | 35 | 15 | 80.6 | ⊚ | 70.3 |
| Inven tive examp le 47 | 149.9 | 85 | Shielded metal arc welding rod | 5 | 50 | 12 | 72.3 | ⊚ | 70.2 |
| Inven tive examp le 48 | 142.9 | 55 | Shielded metal arc welding rod | 5 | 35 | 10 | 72.6 | ⊚ | 69.5 |
| Inven tive examp le 49 | 126.6 | 148 | Shielded metal arc welding rod | 3 | 35 | 10 | 92.9 | ⊚ | 70.0 |
| Inven tive examp le 50 | 215.2 | 125 | Shielded metal arc welding rod | 3 | 38 | 15 | 92.6 | ⊚ | 71.1 |
| Inven tive examp le 51 | 166.3 | 60 | Shielded metal arc welding rod | 5 | 70 | 12 | 72.3 | ○ | 65 |
| Inven tive examp le 52 | 149.9 | 175 | Shielded metal arc welding rod | 5 | 70 | 11 | 72.2 | ○ | 68 |
| Inven tive examp le 53 | 125.8 | 34 | Shielded metal arc welding rod | 8 | 13 | 15 | 53.9 | ○ | 67.1 |
| Inven tive examp le 54 | 204.9 | 180 | Shielded metal arc welding rod | 5 | 30 | 1 | 71.7 | ○ | 68.5 |
| Inven tive examp le 55 | 129.8 | 45 | Shielded metal arc welding rod | 8 | 11 | 4 | 53.5 | ○ | 66.2 |
| Inven tive examp le 56 | 172.2 | 80 | Shielded metal arc welding rod | 13 | 35 | 8 | 36.4 | ○ | 60.4 |
| Inven tive examp le 57 | 195.7 | 290 | Shielded metal arc welding rod | 12 | 38 | 7 | 39.0 | ○ | 56.8 |
| Inven tive examp le 58 | 121.9 | 240 | Shielded metal arc welding rod | 12 | 50 | 10 | 39.3 | ○ | 59.2 |
| Inven tive examp le 59 | 225.1 | 155 | Shielded metal arc welding rod | 8 | 35 | 1 | 52.5 | ○ | 65.3 |
| Compa rativ e examp le 4 | 179.4 | 280 | Solid wire | - | - | - | 16.3 | X | 56.8 |
| Compa rativ e examp le 5 | 121.7 | 120 | Solid wire | - | - | - | 15.5 | X | 55.0 |
| Compa rativ e examp le 6 | 150.0 | 230 | Solid wire | - | - | - | 14.4 | X | 56.9 |
| Compa rativ e examp le 7 | 149.9 | 85 | Solid wire | - | - | - | 16.2 | X | 55.3 |
| Compa rativ e examp le 8 | 152.3 | 200 | Solid wire | - | - | - | 16.3 | X | 54.8 |
| Compa rativ e examp le 9 | 130.6 | 183 | Solid wire | - | - | - | 16.9 | X | 56.9 |
| Compa rativ e examp le 10 | 152.3 | 200 | Flux-cored wire | - | - | - | 13.1 | X | 55.4 |
| Compa rativ e examp le 11 | 225.1 | 120 | Flux-cored wire | - | - | - | 13.8 | X | 50.8 |
| Compa rativ e examp le 12 | 161.7 | 215 | Flux-cored wire | - | - | - | 12.6 | X | 52.0 |
| Compa rativ e examp le 13 | 148.3 | 200 | Flux-cored wire | - | - | - | 12.1 | X | 51.3 |
| Compa rativ e examp le 14 | 126.6 | 183 | Flux-cored wire | - | - | - | 12.4 | X | 55.4 |
| Compa rativ e examp le 15 | 150.0 | 230 | Flux-cored wire | - | - | - | 12.7 | X | 53.3 |
| Compa rativ e examp le 16 | 149.9 | 85 | Shielded metal arc welding rod | - | - | - | 10.9 | X | 52.7 |
| Compa rativ e examp le 17 | 166.1 | 180 | Shielded metal arc welding rod | - | - | - | 11.2 | X | 52.3 |
| Compa rativ e examp le 18 | 204.9 | 210 | Shielded metal arc welding rod | - | - | - | 11.1 | X | 53.3 |
| Compa rativ e examp le 19 | 161.7 | 215 | Shielded metal arc welding rod | - | - | - | 11.2 | X | 53.1 |
| Compa rativ e examp le 20 | 121.9 | 181 | Shielded metal arc welding rod | - | - | - | 11.4 | X | 55.5 |
| Compa rativ e examp le 21 | 179.4 | 280 | Shielded metal arc welding rod | - | - | - | 11.2 | X | 55.8 |

As shown in Tables 6 to 8 above, in Inventive Examples 4 to 59 satisfying a microstructure of a portion the Zn-Al-Mg-based plating layer defined in the present disclosure, closest to the welded joint portion, and cooling conditions after arc welding, water controlled to be in a range of 30°C was sprayed onto a surface of the welded joint portion within 3 to 10 seconds after passing through a welding torch, during cooling after welding, and a size of droplets was controlled to be in a range of 50 um. In this case, no cracks were observed in a weld zone, and a change rate of a hardness value before and after welding was also secured at 69.5% or more.

In particular, with respect to plated steel sheets obtained from Inventive Examples 4 to 59 in the same manner as Experimental Example 1, a microstructure of the portion closest to the welded joint portion of the Zn-Al-Mg-based plating layer was observed, and in the case of Inventive Examples 4 to 59, it was confirmed that the microstructure of the portion closest to the welded joint portion of the Zn-Al-Mg-based plating layer includes a Zn-Mg-based intermetallic compound at 20 to 40 % and a Zn single phase at 60% or more (i.e., a remainder of the Zn single phase).

On the other hand, air cooling was performed to satisfy the composition of the plating layer specified in the present disclosure, but not to satisfy the cooling condition specified in the present disclosure, and in addition, in the case of Comparative Examples 4 to 21, in which the microstructure of the plating layer closest to the welded joint portion does not satisfy the conditions specified in the present disclosure, cracks occurred in all weld zones, and a change rate of a hardness value before and after welding was also less than 69.5%.

In addition, in the case of Comparative Examples 4 to 21, a length of the plating layer evaporation section 15 in all test pieces was less than 3 mm, and a crack occurred due to the deepest hot dipping metal layer was from the bead toe portion 12 in most samples occurred in a site in which a distance thereof from the bead toe portion 12 was within 2 mm.

On the other hand, in Inventive Examples of the present disclosure, hot-dip metal embrittlement cracking was not observed, and the lengths of the plating layer evaporation section 15 were all 3 mm or more and 10 mm or less.

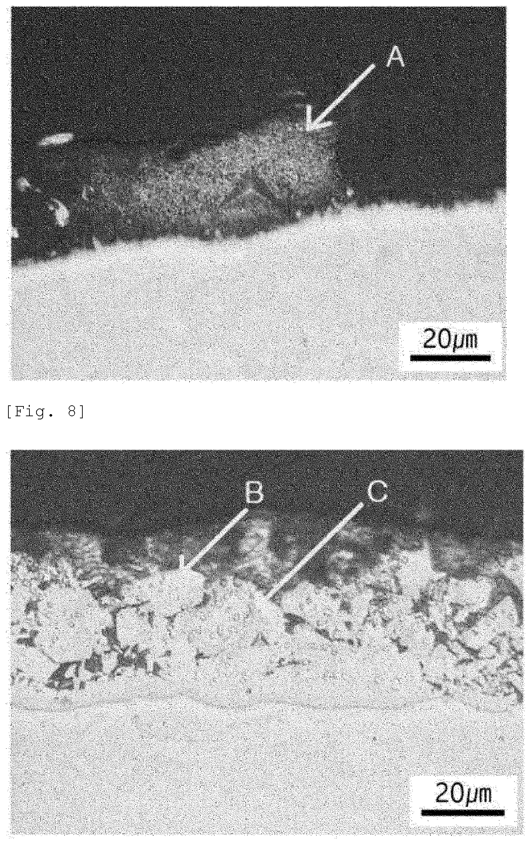

In particular, the microstructure of the plating layer closest to the welded joint portion was measured in the same manner as in the above-described specification, and images captured with an optical microscope (OM) were shown in FIGS. 7 and 8.

FIG. 7 illustrated a microstructure of the plating layer closest to the welded joint portion of Comparative Example 10 of the present application, and it was confirmed that the microstructure was homogenized (corresponding to A in FIG. 7) under slow cooling conditions.

On the other hand, FIG. 8 illustrated a microstructure of the plating layer closest to the welded joint portion for Inventive Example 2 of the present disclosure, and it was confirmed that it was formed of a base structure comprising a Zn single phase(corresponding to B in FIG. 8) and a Zn-Mg-based intermetallic compound, which is a secondary phase (including binary and ternary phases; corresponding to C in FIG. 8) due to rapid cooling by the present disclosure, and the Zn-Mg-based intermetallic compound was included to be in a range of 20 to 40%, and the Zn single phase was included at 60% or more. In this case, it was confirmed that the Zn-Mg-based intermetallic compound had an average diameter of 1 to 30 um based on a cutting surface in the thickness direction.

### (DESCRIPTION OF REFERENCE OF NUMERALS)

1: WELDED STEEL SHEET
2: SHIELDING GAS
3: WELD ZONE
4: ARC
5: WELDING WIRE
6: ELECTRODE
7: WELDING TORCH
10, 10': TWO STEEL SHEETS TO BE WELDED
11: WELD BEAD
12: BEAD TOE PORTION
13: Zn-Al-Mg-BASED HOT DIPPING METAL LAYER
14: Zn-Al-Mg PLATING LAYER WHICH IS NOT MELTED
15: PLATING LAYER EVAPORATION SECTION
16: SOLIDIFICATION REGION OF Zn-Al-Mg-BASED HOT DIPPING METAL LAYER
17: SOLIDIFICATION REGION OF Zn-Al-Mg-BASED HOT DIPPING METAL LAYER
18: EXISTING PLATING METAL LAYER
20: STEEL PIPE
21: PLATING METAL LAYER
22: TEST PIECE
23: WELD BEAD
24: BEAD OVERLAPPING PORTION
S: WELDING START POINT
E: WELDING END POINT

While example embodiments have been shown and described above, it will be apparent to those skilled in the art that modifications and variations could be made without departing from the scope of the present disclosure as defined by the appended claims.

## Claims

1. A welded structural member, comprising:
a first steel sheet;
a second steel sheet; and
a welded joint portion bonding the first steel sheet and the second steel sheet,
wherein at least one of the first steel sheet and the second steel sheet is a plated steel sheet having a Zn-Al-Mg-based plating layer,
wherein a microstructure of a portion of the Zn-Al-Mg-based plating layer, closest to the welded joint portion includes, by area fraction: 20 to 40% of a Zn-Mg-based intermetallic compound.

2. The welded structural member of claim 1, wherein the microstructure of the portion of the Zn-Al-Mg-based plating layer, closest to the welded joint portion further comprises, by area fraction: 60% or more of a Zn single phase.

3. The welded structural member of claim 1, wherein a distance between plating layers from a bead toe portion of the welded joint portion is 3 to 10 mm.

4. The welded structural member of claim 1, wherein hardness of the portion of the Zn-Al-Mg-based plating layer, closest to the welded joint portion is 69.5% or more compared to hardness of a plating layer before welding.

5. The welded structural member of claim 1, wherein an average diameter of the Zn-Mg-based intermetallic compound is within a range of 1 to 30 µm.

6. A manufacturing method of a welded structural member, comprising operations of:
preparing a first steel sheet and a second steel sheet;
forming a welded joint portion by arc welding the first steel sheet and the second steel sheet using any one of welding materials selected from a solid wire, a flux-cored wire, and a shielded metal arc welding rod; and
water cooling the same to an average cooling rate of 25 to 110° C/s, based on a surface temperature of the welded joint portion,
wherein at least one of the first steel sheet and the second steel sheet is a plated steel sheet having a Zn-Al-Mg-based plating layer.

7. The manufacturing method of a welded structural member of claim 6, wherein the welding material is a solid wire,
wherein the welded joint portion comprises, by weight:
0.09 to 0.15% of C, 0.35 to 0.39% of Si, 0.87 to 0.90% of Mn, 0.004 to 0.022% of P, 0.002 to 0.014% of S, 0.01 to 0.11% of Cr, 0.01 to 0.08% of Ni, 0.01 to 0.06% of Cu, 0.01% or less (including 0%) of Mo, 0.01 to 0.02% of Al, with a balance of Fe and inevitable impurities.

8. The manufacturing method of a welded structural member of claim 6, wherein the welding material is a flux-cored wire,
wherein the welded joint portion comprises, by weight:
0.05 to 0.10% of C, 0.47 to 0.53% of Si, 1.10 to 1.16% of Mn, 0.009 to 0.025% of P, 0.007 to 0.018% of S, 0.03 to 0.13% of Cr, 0.02 to 0.11% of Ni, 0.02 to 0.08% of Cu, 0.02 to 0.07% of Mo, 0.005 to 0.02% of Al, with a balance of Fe and inevitable impurities.

9. The manufacturing method of a welded structural member of claim 6, wherein the welding material is a shielded metal arc welding rod,
wherein the welded joint portion comprises, by weight:
0.06 to 0.14% of C, 0.42 to 0.49% of Si, 0.83 to 0.91% of Mn, 0.015 to 0.035% of P, 0.010 to 0.022% of S, 0.07 to 0.20% of Cr, 0.06 to 0.15% of Ni, 0.05 to 0.12% of Cu, 0.05 to 0.10% of Mo, 0.01 to 0.02% of Al, with a balance of Fe and inevitable impurities.

10. The manufacturing method of a welded structural member of claim 6, wherein the water cooling operation starts cooling within 3 to 10 seconds, after passing through a welding torch.

11. The manufacturing method of a welded structural member of claim 6, wherein the water cooling operation is performed at a flow rate of 15 to 60mm³/hr.

12. The manufacturing method of a welded structural member of claim 6, wherein the water cooling operation is performed so that water cooling continues for 5 to 15 seconds from a time when water cooling starts in the welded joint portion.

13. The manufacturing method of a welded structural member of claim 6, wherein an operation of forming the welded joint portion is performed with a heat input of 3 to 8kJ/cm.
